# EUROPEAN PATENT SPECIFICATION

(11) **EP 1 464 555 B1**
(45) Date of publication and mention of the grant of the patent: **16.12.2009**
(21) Application number: 04007624.2
(22) Date of filing: 30.03.2004
(51) Int. Cl.: B60T 13/26, B60T 11/32

(54) **A pneumatic braking system for a motor vehicle**
Pneumatisches Bremssystem für ein Fahrzeug
Système pneumatique de freinage pour un véhicule motorisé

(30) Priority: 01.04.2003 IT TO20030248
(43) Date of publication of application: 06.10.2004
(73) Proprietor: KNORR-BREMSE SISTEMI PER AUTOVEICOLI COMMERCIALI S.P.A., 20043 Arcore (Milano) (IT)
(72) Inventor: Rapa, Antonio, 20052 Monza (Milano) (IT); Caldirola, Davide, 20045 Besana in Brianza (Milano) (IT)
(74) Representative: Quinterno, Giuseppe

(56) References cited:
- EP-A- 0 726 190
- EP-A- 0 911 237
- US-A- 3 856 361
- US-A- 4 190 298
- US-A- 4 919 492

## Description

The present invention relates to a pneumatic braking system for a motor vehicle having at least one front axle and one rear axle to the wheels of which are associated respective braking cylinders belonging to a first and, respectively, a second pneumatic circuit connected to respective sections of a service brake control valve unit, and in which the said braking circuits are associated with a first and, respectively, a second source of air under pressure connected to corresponding inlets of the said service brake control valve unit; the system including a front axle brake valve unit, including an emergency control valve having
an outlet,
a pneumatic power inlet connected to a source of pressure different from the said first source, and
a pneumatic control inlet piloted by the outlet from the service brake control valve which is associated with the rear axle braking circuit.

A pneumatic braking system of this type is described for example in European Patent Application EP 0 726 190 A1.

In the braking system known from this document the said brake valve unit associated with the front axle has an "asymmetric" structure: a supplementary relay valve is connected between the outlet of the normal relay valve which provides the braking pressure to the front axle and the brake cylinder of one wheel of this axle; the braking cylinder associated with the other wheel of the said axle is, on the other hand, connected directly to the output of the said normal relay valve. The supplementary relay valve is of special type, and its air discharge outlet is connected to the outlet of the normal relay valve. Moreover, the supplementary relay valve has a pneumatic power inlet connected to the pressure reservoir associated with the parking brake circuit by means of a non-return value and a throttle.

This known system makes it possible, if a loss happens in the braking circuit associated with the front axle, to ensure the braking of a predetermined wheel of the front axle as well as the braking action of the circuit associated with the rear axle. This makes it possible to achieve a more effective and secure braking, practically appreciable when the load which acts on the rear axle is reduced.

One object of the present invention is to provide a pneumatic braking system of the type initially specified, which also make it possible, in the event of a failure in the braking circuit associated with the front axle, to back up the braking of at least one front wheel to the braking of the wheels of the rear axle, but which further has a simple architecture which is more symmetrical with respect to prior art systems.

This and other objects are achieved according to the invention with a pneumatic braking system of the above specified type, the principal characteristic of which resides in the fact that the said brake valve unit of the front axle comprises first and second selector valves having
a respective first inlet connectable in operation to the said first pressure source,
a respective second inlet connected to the outlet of the said emergency control valve, and
an outlet, connected to the brake cylinder of a corresponding wheel of the front axle and capable of being put selectively into communication with the first or the second inlet of the selector valve in dependence on the pressure difference between the said inlets;
each selector valve being, in particular, arranged in such a way that it normally allows communication between its outlet and its first inlet as long as the air pressure at the said first inlet is greater than or equal to the pressure at its second inlet;
the said emergency control valve being formed in such a way that in normal operation it provides an air pressure to the second inlet of the said selector valve less than that present at its first inlet.

Further characteristics and advantages of the invention will become apparent from the following detailed description, given purely by way of non-limitative example, with reference to the attached drawings, in which:
Figure 1 is a diagram of a pneumatic braking system according to the invention;
Figure 2 is a partial diagram which shows a first variant embodiment of the system according to the invention;
Figure 3 is a partly sectioned schematic view which shows an embodiment of the valve unit of figure 2;
Figure 4 is a diagram similar to that of figure 2, and shows a second variant embodiment of a system according to the invention;
Figure 5 is partially sectioned view of an embodiment of the valve schematically shown in figure 4; and
Figure 6 is a sectioned view taken on the line VI-VI of figure 5.

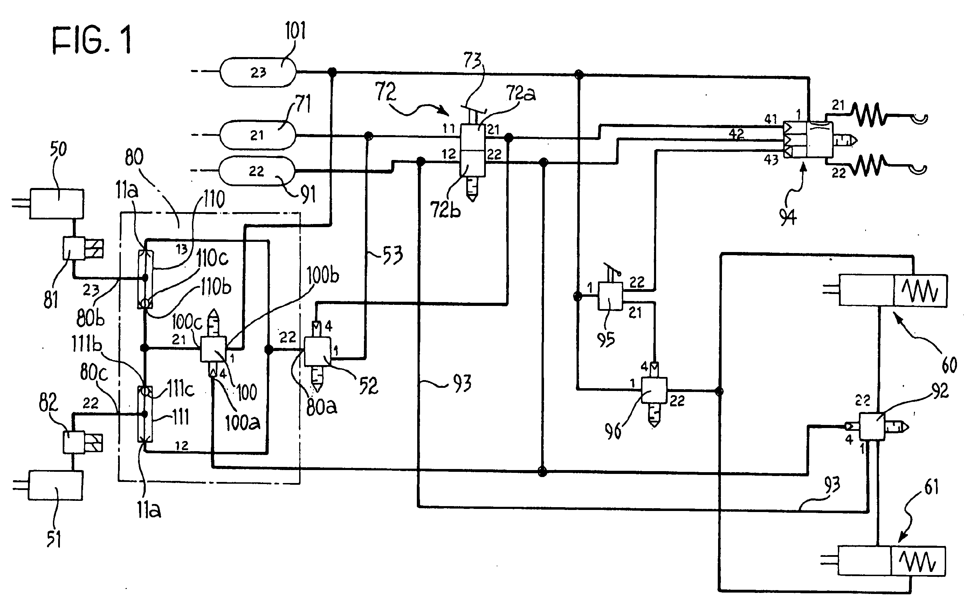

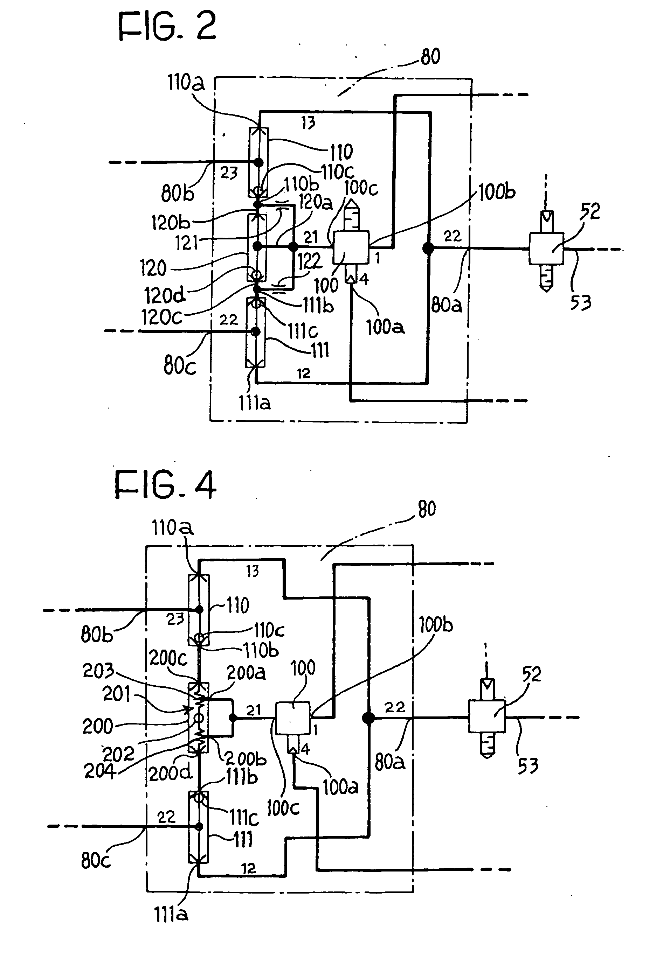

Figure 1 shows a pneumatic braking system according to the invention for a motor vehicle, in particular for a tractor able to draw a trailer. In figure 1, as in figures 2 and 4, components and their connectors or openings are indicated (or also indicated) with the conventional numeration in use according to the ISO rules, for a more rapid understanding by specialists in the field.

The pneumatic braking system of figure 1 comprises two brake cylinders 50 and 51, respectively associated with the right and left wheel of the front axle of the motor vehicle, as well as two spring braking twin elements 60, 61 associated with the rear axle of the motor vehicle.

The brake cylinders 50 and 51 are located in a first pneumatic braking circuit which includes a reservoir 71 for air under pressure, the outlet of which is connected to the inlet of a first section 72a of a control valve unit of the service brake 72 which can be actuated by means of a pedal 73. The outlet of the first section 72a of the valve unit 72 is connected to the command input of a relay valve 52 which has a pneumatic power feed inlet connected to the outlet of the reservoir 71. The output of the relay valve 52 is coupled to an inlet 80a of a brake valve unit of the front axle, generally indicated 80. This valve unit has two outlets 80b and 80c, respectively connected to the brake cylinder 50 and to the brake cylinder 51, possibly though pressure control solenoid valves 81, 82 of an associated ABS/EBS (Anti-lock Braking System/Electronic Braking System) of type known per se.

The combined braking elements 60 and 61 associated with the rear axle are located in a second pneumatic braking circuit which includes a pressurised air reservoir 91 the outlet of which is coupled to the inlet of a second section 72b of the service brake control valve unit 72. The outlet of this section 72b of the valve unit 72 is connected to the command input of relay valve 92 having a power supply input connected to the output of the reservoir 91 by means of a tube 93. The output of the relay valve 92 is connected to the pneumatic sections of the combined cylinders 60 and 61 associated with the rear axle.

In a manner known per se the outputs of the sections 72a and 72b of the control valve unit of the service brake 72 are connected to a valve unit 94 for control of the braking of a possible trailer. To this valve unit is connected the output of an air pressure reservoir 101. The outlet of this reservoir is, moreover, connected to the power inlet of a parking brake control valve 95 and a further relay valve 96 the output of which is coupled to the spring sections of the combined brakes 60 and 61 of the rear axle. In a manner known per se the outlet of the valve 95 is connected to the control inlet of the relay valve 96, and to one section of the trailer brake control valve unit 94.

The front axle brake valve unit 80 includes an emergency control valve 100, conveniently a relay valve, having a control input 100a piloted by the outlet of the section 72b of the service brake control valve unit 72 associated with the braking circuit of the rear axle. The emergency control valve 100 has a power input 100b connected to a different source of pressure from the reservoir 71 which is associated with the front axle braking circuit. In the illustrated embodiment this inlet 100b is connected to the reservoir 101 which is associated with the valve units 94, 95 and 96.

The valve unit 80 further comprises first and second selector valves 110 and 111, which in the illustrated embodiment, are formed as twin non-return valves. These selector valves have respective first inlets 110a, 111a which in operation are connectable, via the relay valve 52 to the pressure reservoir 71 which is associated with the front axle braking circuit.

The selector valves 110 are 111 each have a respective second inlet 110b, 111b connected to the outlet 100c of the emergency control valve 100. The outlets of the selector valves 110 and 111 correspond to the outlets 80b and 80c of the valve unit 80, and are connected to the brake cylinders 50 and 51 respectively.

The selector valves 110 and 111 are such that their respective outlets are capable of being put selectively in communication with the first inlet 110a, 111a or with the second inlet 110b, 111b in dependence on the pressure difference between these inlets.

As is shown in the schematic diagram of figure 1, each selector valve 110, 111 is, in particular, arranged in such a way that it normally allows communication between its outlet and its first inlet 110a, 111a as long as the air pressure at this first inlet is greater than or equal to the pressure present at the second inlet 110b, 111b.

The emergency relay valve 100 is formed in such a way that in normal operation it provides to the second inlet 110b, 111b of the selector valves 110, 111 an air pressure less than that provided at their first inlet 110a, 111a by the relay valve 52.

The brake system described above with reference to figure 1 operates in the following manner.

In normal operation, that is to say in the absence of losses or failures, the actuation of the service brake control valve 72 causes the application of control pressures to the relay valves 52 and 92 associated with the front axle and the rear axle respectively. A control pressure is likewise applied to the emergency relay valve 100 via the second section 72b of the service brake control valve 72, which is associated with the rear axle.

The relay valve 52 now causes the passage of air under pressure from the reservoir 71 towards the inlets 110a, 111a of the selector valves 110 and 111. At the same time the emergency relay valve 100 causes the passage of air under pressure from the reservoir 101 to the inlet 110b, 111b of the said selector valves. However, since, as mentioned above, the selector valves 110, 111 are predisposed to the condition illustrated in figure 1, and moreover, the pressure at the outlet of the emergency relay valve 110 is less than the pressure at the outlet of the main relay valve 52, the selector valves 110 and 111 remain in the condition illustrated in the said figure 1. Therefore, in normal operation, the selector valves 110 and 111 transfer the pressure existing at the outlet of the relay valve 52 to the brake elements 50 and 51 of the front axle.

To the pneumatic sections of the combined brake elements 60 and 61 of the rear axle there is instead provided a brake pressure from the relay valve 92, this pressure coming from the reservoir 91 through the duct 93.

If, during service braking, a rupture, and thus a consequent loss of pressure between the outlet of the reservoir 71 associated with the front axle and the associated devices downstream occurs, the pressure at the inlets 110a, 111a of the selector valves 110 and 111 fall and, as soon as it becomes less than the pressure present at the inlets 110b of these selector valves they commute and the associated shutters 110c and 111c occlude the inlets 110a and 111a. In these conditions, the brake elements 50 and 51 of the motor vehicle front axle are still supplied with a brake pressure through the emergency relay valve 100, this brake pressure coming from the reservoir 101 and being controlled by the outlet pressure of the section 72b of the service brake valve 72, which section is associated with the rear axle. A failure or pressure loss downstream of the reservoir 71 does not, however, prejudice the possibility of braking the motor vehicle both on the front axle and on the rear axle.

If, during braking, there is a pressure loss between the outlet 80b of the valve unit 80 and the brake cylinder 50, the reservoir 71 is progressively discharged to atmosphere through such rupture. The pressure at the inlet 110a of the selector valve 110 now falls relative to the pressure at the inlet 110b. As soon as the shutter 110c of this selector valve 110 moves past the outlet 80b the pressure loss from the reservoir 71 is reduced, but the pressure in the reservoir 101 begins to vent to atmosphere (through the leak between the valve unit 80 and the brake cylinder 50) . Up to now (and also here-in-after) the front brake element 51 still receives brake pressure. The loss of pressure at the reservoir 101 can lead to intervention of the spring sections of the combined brake elements 60 and 61 of the rear axle, which is entirely positive for the purposes of braking the motor vehicle.

Depending on the manner in which the pressure loss through the rupture point develops, it can become, after a certain time, less than the brake pressure even at the brake element 51 of the front axle.

However, if braking in emergency conditions does not have an excessively long duration, a certain (that is partial) braking action by the brake cylinder 51 remains assured.

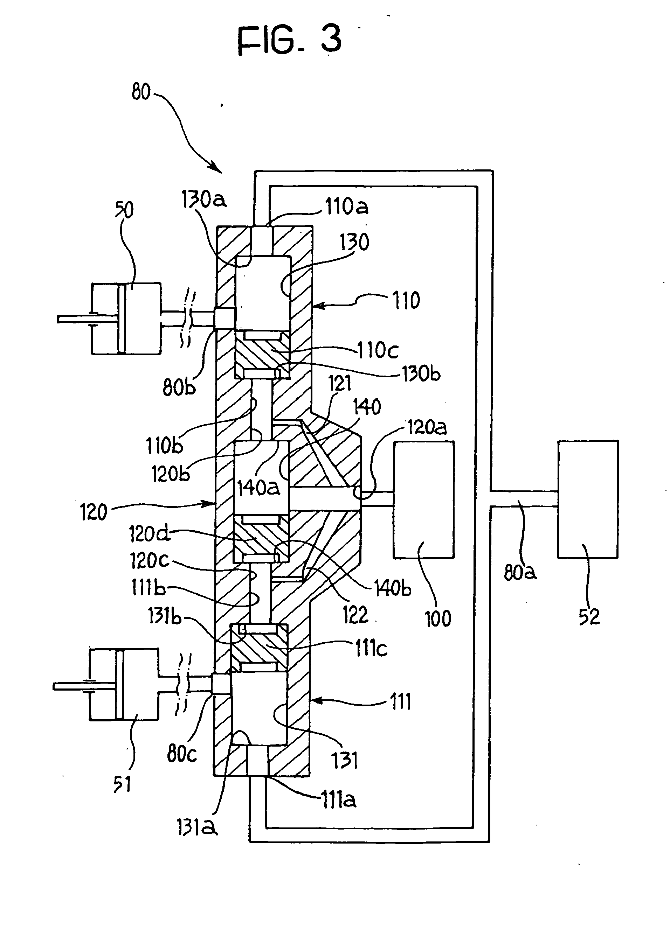

In the variant embodiment illustrated in figures 2 and 3 the brake unit 80 of the front axle brake further includes a third selector valve indicated 120. This selector valve 120 has an inlet 120a connected to the outlet of the emergency valve 100, and first and second outlets, 120b and 120c connected to the inlet 110b of the first selector valve 110 and, respectively, to the inlet 111b of the second selector valve 111.

Between the outlet 100c of the emergency valve 100 and the outlets 120b and 120c of the selector valve 120 are formed two by-pass ducts 121 and 122 having a restricted section.

The selector valve 120 includes a shutter 120d.

With reference to figure 3, the shutters 110c, 111c and 120d of the selector valves 110, 111 and 120 are slidably mounted in respective passages 130; 131 and 140 between respective pairs of opposite valve seats 130a and 130b, 131a and 131b, 140a and 140b, to which they can be associated in frontal sealing relationship. The shutters 110c and 111c of the first and second selector valve 110 and 111 are preferably formed in such a way that they are slidable in their respective passage without an absolute radial seal, that is to say in such a way as to allow a blow-by of air between the regions situated upstream and downstream of these shutters.

In the variant according to figures 2 and 3 the emergency relay valve 100 is also formed in such a way that in normal operation it delivers at its outlet a pressure less than the pressure delivered at the outlet of the relay valve 52, for example about half of this pressure.

In normal operation, that is in the absence of any rupture or pressure loss, the brake system comprising the valve unit 80 of figures 2 and 3 operates substantially as that previously described with reference to figure 1: the shutters of the selector valves 110, 111 and 120 are disposed as shown in figure 3 and air under pressure from the outlet of the relay valve 52 arrives at the brake cylinders 50 and 51.

A failure with substantial loss of pressure downstream from the reservoir 71, for example, in particular, downstream of the relay valve 52, does not compromise the possibility of braking the front axle: braking of the front axle is still assured through the emergence relay valve 100 once the shutters 110c and 111c of the selector valves 110, 111 have commuted their positions.

If, on the other hand, a failure with substantial loss of pressure between the outlet of one of the selector valves 110, 111 and the corresponding brake cylinder 50 or 51 should occur the valve unit 80 according to figures 2 and 3 makes it possible again to have available a certain braking of the wheel of the front axle associated with the other brake cylinder.

If it is supposed, for example, that the failure takes place between the outlet 80b of the valve unit 80 and the brake cylinder 50, then initially, starting from the configuration shown in figure 3, the pressure at the inlet 110a falls, but still prevails over the pressure present at the inlet 110b of the selector valve 110. The brake cylinder 51 still receives a substantial braking pressure.

Subsequently, the reservoir 71 associated with the front axle braking circuit starts to discharge by the effect of the pressure loss through the rupture. The pressure in the two branches downstream of the relay valve 52 correspondingly falls until the pressure at the inlet 110a of the selector valve 110 reaches a pressure equalisation with the inlet 110b. The further reduction in the pressure downstream of the relay valve 52 causes the shutter 110c of the valve 110 to move, separating from the valve seat 130b, towards the opposite valve seat 130a. The pressure in the passage 140 of the central selector valve 120, above the shutter 120d, now falls considerably in that the portion of the passage 140 is put into communication with the atmosphere through the rupture. The shutter 120d now moves away from the valve seat 140b towards the valve seat 140a. Having reached this seat the shutter 120d substantially decouples the outlet 80b of the valve unit 80 from the outlet of the emergency relay valve 100 (except for the modest blowby through the throttled by-pass ducts 121). The brake cylinder 51 continues to be provided, through the relay valve 52, with a brake pressure, although this is reduced. The pressure delivered by the reservoir 71 continues however to fall, and therefore the pressure at the inlet 111a of the selector valve 111 falls below the pressure at the outlet 111b. The shutter 111c also leaves the position illustrated in figure 3, so as to occlude the seat of the'opposite valve 131a.

In this way a terminal equilibrium condition is reached in which the shutter 110c is essentially halfway between the valve seats 130a and 130b, the shutter 120d closes the seat 140a, whilst the shutter 111c closes the valve seat 131a. In this condition the brake cylinder 51 still receives a braking pressure through the emergency relay valve 100, this pressure coming from the reservoir 101 associated with the spring sections of the rear axle combined brake elements 60 and 61.

In figures 4 to 6 there is shown a further variant embodiment of the front axle brake valve unit 80. In these figures, the parts and elements already described are again attributed the same alphanumeric reference numerals as previous utilised.

With reference in particular to figure 4, the valve unit 80 comprises an intermediate valve 200 with two inlets 200a and 200b connected to the outlet 100c of the emergency valve 100. The valve 200 further has first and second outlets 200c and 200d, connected to the inlets 100b and 111b of the selector valves 110 and 111 respectively.

The inlets 200a and 200b of the valve 200 face, or rather open into, a passage 201 in which there is slidably sealingly mounted a shutter 202 movable between the two outlets 200c and 200d. This shutter 202 is disposed in the passage 201 in an intermediate position between the inlets 200a and 200b and is capable of displacing so as to intercept one outlet, for example the outlet 200c, when the pressure at the other outlet 200d exceeds the pressure present at the first outlet 200c by a predetermined quantity.

Two elastic members 203 and 204, such as coil springs, are disposed on opposite sides of the shutter 202 and tend to maintain it normally in an intermediate position between the inlets 200a and 200b. These elastic elements 203 and 204 therefore determine a minimum threshold pressure difference between the outlets of the valve 200 beyond which a displacement of the shutter 202 intervenes.

The variant according to figures from 4 to 6 allows, in the case of pressure loss from one outlet of the valve unit 80 of the front axle brake, the duct in which the loss is located to be isolated by means of the shutter 202 of the intermediate valve 200.

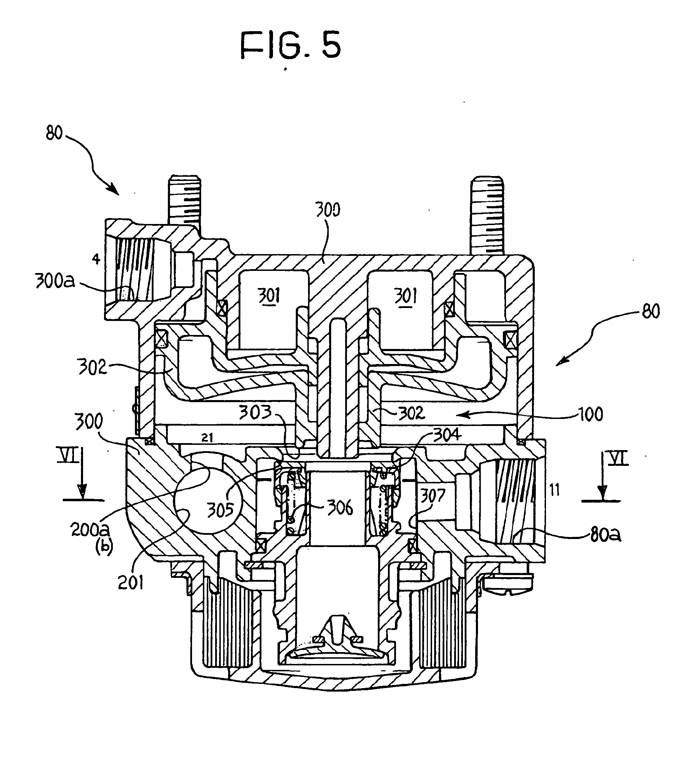

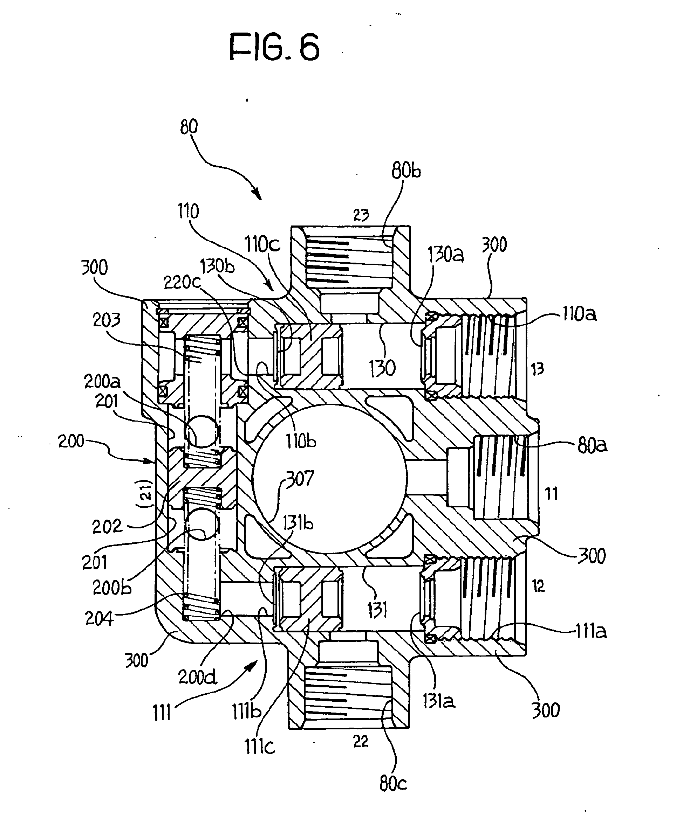

In figures 5 and 6 there is shown, by way of non limitative example, one practical embodiment of a valve unit 80 according to the diagram of figure 4. In figures 5 and 6 the parts and elements described with reference to figure 4 are again allocated the same alphanumeric reference symbols.

Very briefly, the valve unit 80 of figures 5 and 6 comprises a rigid envelope 300 in which, in a chamber indicated 301 in figure 5, is formed a relay valve 100 of absolutely conventional type. This valve includes a piston 302 exposed to the control pressure supplied to an inlet 304 of the valve unit. The undertide of the piston 302 forms a valve seat 303 capable of being engaged by a movable shutter 304 normally pressed against a stationery valve seat 305 by means of a spring 306 (figure 5). The shutter 305 is movably mounted in a chamber 307 of the valve unit, which communicates with the inlet connector 80a.

In the exemplary embodiment illustrated (see figure 6) the selector valves 110, 111 and the intermediate valve 200 are disposed in an essentially square C-shape arrangement about the chamber 307 mentioned above, and the outlet connectors 80b and 80c, intended to be connected to the brake cylinders 50 and 51 of the front axle, extend on opposite sides of the body or envelope 300 of the valve unit 80.

Naturally, the principle of the invention remaining the same, the embodiments and details of construction can be widely varied with respect to what has been described and illustrated merely by way of non-limitative example, without by this departing from the ambit of the invention as defined the annexed claims.

## Claims

1. A pneumatic braking system for a motor vehicle having at least one front axle and a rear axle to the wheels of which are associated respective brake cylinders (50, 51; 60, 61) belonging to first and second pneumatic braking circuits respectively connected to respective sections (72a, 72b) of a service brake control valve unit (72), and in which the said braking circuits are associated with first and second pressurised air supplies (71,91) respectively, connected to corresponding inlets of the said service brake control valve units (72); the system includes a front axle brake valve unit (80), including an emergency control valve (100) having an outlet (100c), a pneumatic power inlet (100b) connected to a pressure source (101) different from the said first source (71) and a pneumatic control inlet (100a) piloted from the outlet (72b) of the service brake control valve unit (72) which is associated with the rear axle braking circuit:
the system being **characterised by** the fact that the said front axle brake valve unit (80) comprises first and second selector valves (110, 111) having
a respective first inlet (110a, 111a) connectable in operation to the said first pressure source (71);
a respective second inlet (110b, 111b) connected to the outlet of the emergency control valve (100) and
an outlet (80b, 80c) connected to the brake cylinder (50, 51) of a corresponding wheel of the front axle and capable of being put selectively into communication with the first or the second inlet of the selector valve (110, 111) in dependence on the pressure difference between the said first and second inlets (110a, 110b; 111a, 111b);
each selector valve (110, 111) being in particular predisposed in such a way that it normally allows communication between its outlet (80b, 80c) and its first inlet (110a, 111a) as long as the air pressure at the said first inlet (110a, 111a) is greater than or equal to the pressure at its said second inlet (110b, 111b);
the said emergency control valve (100) being formed in such a way that in normal operation it provides to the second inlets (110b, 111b) of the selector valves (110, 111) an air pressure less than that present at its first inlet (110a; 111a)

2. The system according to claim 1, in which the said selector valves (110, 111) are twin non-return valves.

3. A system according to claim 1 or claim 2, in which the said front axle brake valve unit (80) further includes
a third selector valve (120) having an inlet (120a) connected to the outlet of the said emergency control valve (100), and first and second outlets (120b, 120c) connected to the second inlets (110b, 111b) of the first and second selector valve (110, 111) respectively;
between the outlet (110c) of the emergency control valve (100) and the outlets (120b, 120c) of the said third selector valve (120) there being provided two by-pass ducts (121, 122) of restricted section.

4. A system according to claim 3, in which the said first, second and third selector valve (110, 111, 120) each includes a respective shutter (110c, 111c, 120d) slidable in a passage between a respective pair of opposite valve seats (130a, 130b; 131a, 131b; 140a, 140b) to which they can be applied in frontal sealing relationship: the shutters (110c, 111c) of the first and second selector valve (110, 111) being slidable in their respective passage without radial seal.

5. A system according to claim 1 or claim 2, in which the said front axle brake valve unit (80) further includes an intermediate valve (200) with first and second inlets (200a, 200b) which are connected to the outlet of the emergency valve (100), and with first and second outlets (200c, 200d) connected to the second inlet (110b; 111b) of the first and second selector valve (110, 111) respectively; the inlets (200a, 200b) of the said intermediate valve (200) opening into a passage (201) in which there is sealingly slidably mounted a shutter (202) movable between the said first and second outlet (200c, 200d); the arrangement being such that the said shutter (202) is pre-arranged in an intermediate position between the inlets (200a, 200b) and capable of displacing so as to intercept one outlet (200c; 200d) when the pressure at the other outlet (200d; 200c) exceeds the pressure at the first outlet (200c; 200d) by a predetermined quantity.

## Patentansprüche

1. Pneumatisches Bremssystem für ein Kraftfahrzeug, das mindestens eine Vorderachse und eine Hinterachse aufweist, mit deren Rädern jeweils Bremszylinder (50, 51; 60, 61) verbunden sind, die zu ersten bzw. zweiten pneumatischen Bremskreisen gehören, welche an entsprechenden Abschnitten (72a, 72b) einer Betriebsbremssteuerungs-Ventileinheit (72) angeschlossen sind, wobei diese Bremskreise mit ersten bzw. zweiten Druckluftanschlüssen (71, 91) verbunden sind, die an entsprechenden Einlässen der Betriebsbremssteuerungs-Ventileinheiten (72) angeschlossen sind, und das System eine Vorderachsen-Bremsventileinheit (80) umfasst, einschließlich eines Notsteuerventils (100) mit einem Auslass (100c), einem pneumatischen Krafteingang (100b), der an einer Druckquelle (101) angeschlossen ist, die sich von der ersten Quelle (71) unterscheidet, und einem pneumatischen Steuereingang (100a), der vom Auslass (72b) der Betriebsbremssteuerungs-Ventileinheit (72) aus gesteuert wird, welcher mit dem Hinterachsen-Bremskreis verbunden ist:
wobei das System durch die Tatsache **gekennzeichnet** ist, dass die Vorderachsen-Bremsventileinheit (80) erste und zweite Wahlventile (110, 111) umfasst, die Folgendes aufweisen:
einen jeweiligen ersten Einlass (110a, 111a), der im Betrieb an der ersten Druckquelle (71) anschließbar ist;
einen jeweiligen zweiten Einlass (110b, 111b), der am Auslass des Notsteuerventils (100) angeschlossen ist, und
einen Auslass (80b, 80c), der am Bremszylinder (50, 51) eines entsprechenden Rads der Vorderachse angeschlossen ist und imstande ist, selektiv mit dem ersten oder dem zweiten Einlass des Wahlventils (110, 111) in Verbindung gebracht zu werden, und zwar abhängig vom Druckunterschied zwischen den ersten und zweiten Einlässen (110a, 110b; 111a, 111b);
wobei jedes Wahlventil (110, 111) insbesondere auf solche Weise vorbereitet ist, dass es normalerweise eine Verbindung zwischen seinem Auslass (80b, 80c) und seinem ersten Einlass (110a, 111a) zulässt, solange der Luftdruck am ersten Einlass (110a, 111a) größer als oder gleich dem Druck an seinem zweiten Einlass (110b, 111b) ist;
wobei das Notsteuerventil (100) auf solche Weise gebildet ist, dass es die zweiten Einlässe (110b, 111b) der Wahlventile (110, 111) im normalen Betrieb mit einem Luftdruck versorgt, der geringer als jener ist, der an seinem ersten Einlass (110a, 111a) vorhanden ist.

2. System gemäß Anspruch 1, wobei die Wahlventile (110, 111) Rückschlag-Zwillingsventile sind.

3. System gemäß Anspruch 1 oder Anspruch 2, wobei die Vorderachsen-Bremsventileinheit (80) weiters Folgendes umfasst:
ein drittes Wahlventil. (120), das einen am Auslass des Notsteuerventils (100) angeschlossenen Einlass (120a) und erste und zweite Auslässe (120b, 120c), die an den zweiten Einlässen (110b, 111 b) des ersten bzw. zweiten Wahlventils (110, 111) angeschlossen sind, aufweist;
wobei zwischen dem Auslass (110c) des Notsteuerventils (100) und den Auslässen (120b, 120c) des dritten Wahlventils (120) zwei Umleitungsrohre (121, 122) von eingeschränktem Querschnitt vorgesehen sind.

4. System gemäß Anspruch 3, wobei das erste, das zweite und das dritte Wahlventil (110, 111, 120) jeweils eine entsprechende Klappe (110c, 111c, 120d) umfassen, welche Klappen in einem Durchgang zwischen einem jeweiligen Paar von gegenüberliegenden Ventilsitzen (130a, 130b; 131 a, 131b; 140a, 140b) verschiebbar sind, auf denen sie in frontaler abdichtender Beziehung aufgebracht werden können, wobei die Klappen (110c, 111c) des ersten und des zweiten Wahlventils (110, 111) in ihrem jeweiligen Durchgang ohne radiale Dichtung verschiebbar sind.

5. System gemäß Anspruch 1 oder Anspruch 2, wobei die Vorderachsen-Bremsventileinheit (80) weiters ein Zwischenventil (200) mit einem ersten und einem zweiten Einlass (200a, 200b), die am Auslass des Notventils (100) angeschlossen sind, und mit einem ersten und einem zweiten Auslass (200c, 200d), die am zweiten Einlass (110b; 111b) des ersten bzw. zweiten Wahlventils (110, 111) angeschlossen sind, umfasst; wobei die Einlässe (200a, 200b) des Zwischenventils (200) in einen Durchgang (201) münden, in dem eine zwischen dem ersten und dem zweiten Auslass (200c, 200d) bewegliche Klappe (202) auf abdichtende Weise verschiebbar angebracht ist; wobei die Anordnung darin besteht, dass die Klappe (202) im Vorhinein in einer Zwischenposition zwischen den Einlässen (200a, 200b) angeordnet wurde und zu einer Verschiebung imstande ist, um einen Auslass (200c; 200d) zu unterbrechen, wenn der Druck am anderen Auslass (200d; 200c) den Druck am ersten Auslass (200c; 200d) um eine vorbestimmte Menge überschreitet.

## Revendications

1. Système de freinage pneumatique pour véhicule à moteur ayant au moins un essieu avant et un essieu arrière aux roues desquels sont associés des cylindres de frein respectifs (50, 51 ; 60, 61) appartenant à une premier et un second circuits de freinage pneumatiques respectivement connectés à des sections respectives (72a, 72b) d'une unité de soupape de commande de frein (72) de service et dans lequel lesdits circuits de freinage sont respectivement associés à une première et une seconde alimentation en air comprimé (71, 91) reliées à des entrées correspondantes de ladite unité de soupape de commande de frein (72) de service ; le système comportant une unité de soupape de frein (80) pour l'essieu avant, comprenant une soupape de commande de secours (100) ayant une sortie (100c), une entrée d'énergie pneumatique (100b) reliée à une source de pression (101) différente de ladite première source (71) et une entrée de commande pneumatique (100a) pilotée par la sortie (72b) de l'unité de soupape de commande de frein (72) de service qui est associée au circuit de freinage d'essieu arrière :
le système étant **caractérisé par le fait que** ladite unité de soupape de frein (80) pour l'essieu avant comporte une première et une deuxième soupapes de sélection (110, 111) ayant
une première entrée respective (110a, 111a) connectable en fonctionnement à ladite première source de pression (71) ;
une seconde entrée respective (110b, 111b) connecté à la sortie de la soupape de commande de secours (100) et
une sortie (80b, 80c) reliée au cylindre de frein (50, 51) d'une roue correspondante de l'essieu avant et pouvant être mise sélectivement en communication avec la première ou la seconde entrée de la soupape de sélection (110, 111) en fonction de la différence de pression entre lesdites première et seconde entrées (110a, 110b ; 111a, 111b) ;
chaque soupape de sélection (110, 111) étant spécialement pré agencée de façon telle qu'elle permette normalement une communication entre ses sorties (80b, 80c) et sa première entrée (110a, 111a) aussi longtemps que la pression de l'air à ladite première entrée (110a, 111a) est supérieure ou égale à la pression à sa dite seconde entrée (110b, 111b) ;
ladite soupape de commande de secours (100) étant agencée de telle manière qu'en activité normale elle procure à la seconde entrée (110b, 111b) des soupapes de sélection (110, 111) une pression d'air inférieure à celle présente à leurs premières entrées (110a, 111a).

2. Système selon la revendication 1, dans lequel lesdites soupapes de sélection (110, 111) sont des soupapes de non-retour jumelles.

3. Système selon la revendication 1 ou la revendication 2, dans lequel ladite unité de soupape de frein (80) pour l'essieu avant comporte en outre
une troisième soupape de sélection (120) ayant une entrée 120a) reliée à la sortie de ladite soupape de commande de secours (100) et de première et seconde sorties (120b, 120c) reliées à la seconde entrée (110b, 111b) des première et deuxième soupapes de sélection (110, 111) respectivement ;
deux conduites de dérivation (121, 122) de section réduite étant prévues entre la sortie (110c) de la soupape de commande de secours (100) et les sorties (120b, 120c) de ladite troisième soupape de sélection (120).

4. Système selon la revendication 3, dans lequel lesdites première deuxième et troisième soupapes de sélection (110, 111, 120) comportent chacune une vanne d'obturation (110c, 111e, 120d) coulissant dans un passage chaque fois entre deux sièges de soupape opposés respectifs (130a, 130b ; 131a, 131b ; 140a, 140b) contre lesquels elles peuvent s'appliquer frontalement avec étanchéité, les vannes d'obturation (110c, 111c) de la première et de la deuxième soupape de sélection (110, 111) pouvant coulisser dans leur passage respectif sans joint radial.

5. Système selon la revendication 1 ou la revendication 2, dans lequel ladite unité de soupape de frein (80) pour l'essieu avant comporte en outre une soupape intermédiaire (200) avec une première et une seconde entrées (200a, 200b) qui sont reliées à la sortie de la soupape de commande de secours (100) et, avec la première et la seconde sorties (200c, 200d), reliées à la seconde entrée (110b, 111b) de la première et de la deuxième soupapes de sélection (110, 111) respectivement ; les entrées (200a, 200b) de ladite soupape intermédiaire (200) s'ouvrant sur un passage (201) dans lequel est monté coulissant avec étanchéité une vanne d'obturation (202) déplaçable entre lesdites première et seconde sorties (200c, 200d) ; la disposition étant telle que ladite vanne d'obturation (202) soit prédisposée dans une position intermédiaire entre les entrées (200a, 200b) et puisse se déplacer de façon à intercepter une sortie (200c, 200d) lorsque la pression à l'autre sortie (200d, 200c) dépasse la pression de la première sortie (200c, 200d) d'une quantité prédéterminée.
